# EUROPEAN PATENT APPLICATION

(11) **EP 2 178 139 A1**
(43) Date of publication of application: **21.04.2010**
(21) Application number: 08778305.6
(22) Date of filing: 14.07.2008
(51) Int. Cl.: H01M 4/58, B01J 23/745, C01B 31/02, H01G 9/058, H01M 4/02, H01M 4/62, H01M 10/40, H01M 12/08

(54) **ELECTRODE FOR ELECTROCHEMICAL ENERGY STORAGE DEVICE**

(30) Priority: 12.07.2007 JP 2007182983
(71) Applicant: Sumitomo Chemical Company, Limited, Tokyo 104-8260 (JP)
(72) Inventor: NAKANE, Kenji, Tsukuba-shi Ibaraki 305-0045 (JP); MAKIDERA, Masami, Tsukuba-shi Ibaraki 305-0047 (JP); YAMAMOTO, Taketsugu, Tsukuba-shi Ibaraki 305-0045 (JP)
(74) Representative: Hart-Davis, Jason
(86) International application number: PCT/JP2008/063080
(87) International publication number: WO 2009/008558

(57) **Abstract**

The present invention relates to an electrode for an electrochemical energy storage device. The electrode comprises a nano-structured hollow carbonaceous material and the nano-structured hollow carbonaceous material preferably meets a requirement (A). (A) the nano-structured hollow carbonaceous material has a carbonaceous material portion and a hollow portion, and has such a structure that the hollow portion is covered with the carbonaceous material portion in a saclike shape, a part of the structure, or an aggregate of the structure.

## Description

### TECHNICAL FIELD

The present invention relates to an electrode for an electrochemical energy storage device. More specifically, the present invention relates to an electrode for an electrochemical energy storage device suitable for non-aqueous electrolyte secondary batteries such as a lithium ion secondary battery and a sodium ion secondary battery, a secondary battery such as an air secondary battery, and a capacitor.

### BACKGROUND ART

An electrode for an electrochemical energy storage device is used in electrochemical energy storage devices such as a non-aqueous electrolyte secondary battery including a lithium ion secondary battery and a sodium ion secondary battery, a secondary battery including an air secondary battery, and a capacitor. Among these electrochemical energy storage devices, the non-aqueous electrolyte secondary battery such as the lithium ion secondary battery is a representative electrochemical energy storage device, and is widely used in portable electronic equipment such as a cellular phone, a portable music player, a camcorder, a digital camera, a portable game player, and a notebook personal computer. Further, a demand for the non-aqueous electrolyte secondary battery as a large-sized power source for an electric vehicle or a hybrid vehicle and an power source for distributed power storage is growing.

For example, the non-aqueous electrolyte secondary battery includes a positive electrode, a negative electrode, a separator, an electrolyte salt, and a battery case as main constituent members, and is normally manufactured by inserting electrodes in which the separator is disposed between the positive and negative electrodes into the battery case and filling the battery case with the electrolyte salt.

On the other hand, a carbonaceous material is used for the positive and negative electrodes in the electrochemical energy storage device. The carbonaceous material acts as a conductive material when it is used for the positive electrode, while the carbonaceous material acts as the conductive material and/or an active material when it is used for the negative electrode. The active material mentioned herein means a material that can be doped with ions such as a lithium ion and a sodium ion and release the ions.

Examples of the carbonaceous material used for the electrode in the electrochemical energy storage device include graphite (JP-B-62-23433), carbon black (JP-A-06-68867, JP-A-06-68868, JP-A-06-68869), and carbon nanotube (JP-A-07-14573). The electrode for the secondary battery is normally obtained by coating an electrode collector with an electrode mixture containing the carbonaceous material mentioned above and a binder.

### DISCLOSURE OF THE INVENTION

However, in the electrode having the carbonaceous material, when the carbonaceous material is mixed with the binder, it is difficult to disperse the carbonaceous material, and the density of an electrode constituent material such as the carbonaceous material in the electrode is not high enough. Consequently, the electrode is insufficient in charge/discharge characteristics of the secondary battery having the electrode such as cycle characteristics, and the electrode is also insufficient in terms of an energy density. In particular, in carbon nanotube, since manufacture thereof is difficult, the electrode is insufficient in terms of industrial mass use. An object of the present invention is to provide an electrode for the electrochemical energy storage device that can enhance the charge/discharge characteristics and the energy density to levels higher than those of the electrochemical energy storage device such as a conventional secondary battery, and further can be manufacture at low cost with simpler operations than conventionally.

The present inventors have achieved the present invention as a result of various studies.

Specifically, the present invention provides <1> to <9>.
<1> An electrode for an electrochemical energy storage device comprising a nano-structured hollow carbonaceous material.
<2> The electrode of <1>, wherein the nano-structured hollow carbonaceous material meets a requirement (A),
   (A) the nano-structured hollow carbonaceous material has a carbonaceous material portion and a hollow portion, and has such a structure that the hollow portion is covered with the carbonaceous material portion in a saclike shape, a part of the structure, or an aggregate of the structure.
<3> The electrode of <2>, wherein the nano-structured hollow carbonaceous material further meets requirements (B) and (C),
   (B)the carbonaceous material portion in the nano-structured hollow carbonaceous material has a thickness of from 1 nm to 100 nm,
   (C) the hollow portion in the nano-structured hollow carbonaceous material has a diameter of from 0.5 nm to 90 nm.
<4> The electrode of any one of <1> to <3>, wherein the nano-structured hollow carbonaceous material is obtained by a method including steps (1), (2), (3), and (4) in this order,
   (1) preparing a template catalyst nanoparticle,
   (2) polymerizing a carbonaceous material precursor in presence of the template catalyst reticle to form a carbonaceous material intermediate on a surface of the nanoparticles,
   (3) forming a carbonaceous material by carbonizing the carbonaceous material intermediate to obtain a nano-structured composite material,
   (4) removing the template catalyst nanoparticle from the nano-structured composite material to obtain the nano-structured hollow carbonaceous material.
<5> The electrode of any one of <1> to <4> further comprising a binder.
<6> The electrode of any one of <1> to <5> further comprising an active material.
<7> A non-aqueous electrolyte secondary battery comprising the electrode of any one of <1> to <6>.
<8> The battery of <7>, wherein the non-aqueous electrolyte secondary battery is a lithium ion secondary battery.
<9> The battery of <7>, wherein the non-aqueous electrolyte secondary battery is a sodium ion secondary battery.

### DESCRIPTION OF DRAWINGS

FIG. 1 shows a charge/discharge curve at the second cycle in Example 4;
FIG. 2 shows the charge/discharge curve at the tenth cycle in Example 6; and
FIG. 3 shows a powder X-ray diffraction pattern of a nano-structured hollow carbonaceous material in Example 1.

### MODE FOR CARRYING OUT THE INVENTION

### Electrode for electrochemical energy storage device

An electrode for an electrochemical energy storage device of the present invention has a nano-structured hollow carbonaceous material.

The nano-structured hollow carbonaceous material is nano-sized (about 0.5 nm to 1 µm), and has a carbonaceous material portion and a hollow portion. In order to further enhance the effect of the present invention, the nano-structured hollow carbonaceous material preferably meets a requirement (A), and more preferably meets requirements (A), (B), and (C).
(A) The nano-structured hollow carbonaceous material has the carbonaceous material portion and the hollow portion, and has such a structure that the hollow portion is covered with the carbonaceous material portion in a saclike shape, a part of the structure, or an aggregate of the structure.
(B) The carbonaceous material portion of the nano-structured hollow carbonaceous material has a thickness of from 1 nm to 100 nm.
(C) The hollow portion of the nano-structured hollow carbonaceous material has a diameter of from 0.5 nm to 90 nm.
   In addition, the carbonaceous material portion in the nano-structured hollow carbonaceous material may be multi-layered, and may meet, for example, a requirement (D).
(D) The carbonaceous material portion in the nano-structured hollow carbonaceous material has the multi-layered structure including 2 to 200 layers, and preferably has the multi-layered structure including 2 to 100 layers in terms of manufacture.

The electrode for the electrochemical energy storage device is usually obtained by a method, which will be described later, in which an electrode mixture is obtained by mixing the nano-structured hollow carbonaceous material and a binder, and coating an electrode collector with the electrode mixture. In the mixing, the nano-structured hollow carbonaceous material may have such a structure that the hollow portion is covered with the carbonaceous material portion in a saclike shape, a part of the structure, or an aggregate of the structure. The mixing operation may be performed by a conventional method.

The nano-struotured hollow carbonaceous material can be manufactured by, for example, a method including steps (1), (2), (3), and (4) in this order.
(1) preparing a template catalyst nanoparticle,
(2) polymerizing a carbonaceous material precursor in the presence of the template catalyst nanoparticle to form a carbonaceous material intermediate on a surface of the nanoparticle,
(3) forming a carbonaceous material by carbonizing the carbonaceous material intermediate to obtain a nano-structured composite material, and
(4) removing the template catalyst nanoparticle from the nano-structured composite material to obtain the nano-structured hollow carbonaceous material.

The steps (1), (2), (3), and (4) will be specifically described.

In the step (1), the template catalyst nanoparticle is prepared in the following manner.

By using at least one catalyst precursor and at least one dispersant, the catalyst precursor is reacted or combined with the dispersant to form a catalyst composite. Typically, the catalyst precursor and the dispersant are dissolved in an appropriate solvent to obtain a catalyst solution, or the catalyst precursor and the dispersant are dispersed in an appropriate solvent to obtain a catalyst suspension. The catalyst precursor is combined with the dispersant to form the catalyst composite (catalyst nanoparticle) from the catalyst solution or the catalyst suspension.

The catalyst precursor may be any catalyst precursor as long as it accelerates the polymerization of the carbonaceous material precursor and/or the carbonization of the carbonaceous material intermediate, which will be described later, and is preferably a transition metal such as iron, cobalt, or nickel, and more preferably iron.

The dispersant is selected from what can accelerate to form the catalyst nanoparticle having prescribed stability, size, and uniformity. The dispersant is an organic compound, a polymer, an oligomer, or the like. The dispersant is used by dissolving or dispersing the dispersant in an appropriate solvent.

Preferable examples of the solvent include water and an organic solvent. The solvent is used for the interaction between the catalyst precursor and the dispersant. Similarly to the dispersant, the solvent may have the action of dispersing the catalyst precursor. The solvent may also make the catalyst nanoparticle into the suspension, which will be described later. The solvent is preferably water, methanol, ethanol, n-propanol, isopropyl alcohol, acetonitrile, acetone, tetrahydrofuran, ethylene glycol, dimethylformamide, dimethyl sulfoxide, or methylene chloride. These may be used singly or in combination with another or more.

The catalyst composite includes a single or a plurality of dispersants. The catalyst composite is considered to be a composite which is covered with solvent molecules and obtained from the catalyst precursor and the dispersant. The catalyst composite is obtained by forming the catalyst composite in the catalyst solution or the catalyst suspension and, thereafter, removing the solvent by drying or the like. The catalyst composite can also be made back into the suspension by adding an appropriate solvent.

The method is **characterized in that** the molar ratio between the dispersant and the catalyst precursor is controllable in the catalyst solution or the catalyst suspension. The ratio of a catalyst atom to a functional group of the dispersant is usually about 0.01 : 1 to about 100 : 1, and more preferably about 0.05 :1 to about 50 : 1.

The dispersant can accelerate to form the catalyst nanoparticle extremely small in size and having a uniform particle diameter. The nanoparticle is formed in the presence of the dispersant into the size of usually not more than 1 µm, preferably not more than 50 nm, and more preferably not more than 20 nm.

The catalyst solution or the catalyst suspension may contain an additive in order to accelerate to form the catalyst nanoparticle. Examples of the additive include an inorganic acid and an inorganic base compound. Examples of the inorganic acid include hydrochloric acid, nitric acid, sulfuric acid, and phosphoric acid. Examples of the inorganic base compound include sodium hydroxide, potassium hydroxide, calcium hydroxide, and ammonium hydroxide. As the additive, a basic substance (for example, an ammonia aqueous solution) can be additionally listed. The basic substance is added in order to adjust pH to a range of 8 to 13, preferably 10 to 11. The pH influences the size of the catalyst nanoparticle. For example, when the pH is high, the catalyst precursor is minutely separated, which influences the particle diameter of the catalyst nanoparticle.

In the step of forming the catalyst nanoparticle, a solid substance may be used. An example of the solid substance includes an ion exchange resin. When the solid substance is used, the formation of the catalyst nanoparticle is often accelerated. The solid substance is finally removed from the catalyst solution or the catalyst suspension usually using simple operations.

The mixing is typically performed in the catalyst solution or the catalyst suspension for 0.5 hour to 14 days to obtain the catalyst nanoparticle. The mixing temperature is from about 0°C to about 200°C. The mixing temperature is a significant factor which influences the particle diameter of the catalyst nanoparticle.

When iron is used as the catalyst precursor, an iron compound such as iron chloride, iron nitride, or iron sulfate is formed, and the iron compound is reacted or combined with the dispersant to become the catalyst nanoparticle in a typical case.

The compound formed from the catalyst precursor is highly likely to be dissolved in an aqueous solvent. With the ration of the catalyst nanoparticle by using a metallic salt, a by-product is formed. In a typical case, the by-product is a hydrogen gas generated during preparation of the catalyst using a metal. In a typical embodiment, the catalyst nanoparticle is activated in a mixing step, or further reduced using hydrogen. In a preferred embodiment, the catalyst nanoparticle is formed as the suspension of the metal catalyst nanoparticle which is stably active. The stability of the catalyst nanoparticle reduces the aggregation between the catalyst nanoparticles. Even when a part or all of the catalyst nanoparticles settle, the catalyst nanoparticles are easily re-suspended by mixing.

The obtained catalyst nanoparticle is used as the template catalyst nanoparticle. The template catalyst nanoparticle plays a role as the catalyst for accelerating to polymerize the carbonaceous material precursor and/or to carbonize the carbonaceous material intermediate. The diameter of the nanoparticle influences the diameter of the hollow portion in the nano-structured hollow carbonaceous material.

In the step (2), the carbonaceous material precursor may be any one as long as it can disperse the template catalyst nanoparticle. By dispersing the template catalyst nanoparticle and polymerizing the carbonaceous material cursor, the carbonaceous material intermediate is formed on the surface of the nanoparticle. The carbonaceous material precursor is preferably an organic material such as benzene or a naphthalene derivative having at least one aromatic ring and a functional group for polymerization in its molecule. Examples of the functional group for polymerization include COOH, C=O, OH, C=C, SO₃, NH₂, SOH, and N=C=O. Such a carbonaceous material precursor includes resorcinol, a phenol resin, a melanin-formaldehyde gel, polyfurfuryl alcohol, polyacrylonitrile, sugar, and petroleum pitch.

In the step (2), the template catalyst nanoparticle and the carbonaceous material precursor are usually mixed such that the carbonaceous material precursor is polymerized on the surface of the template catalyst nanoparticle. Since the template catalyst nanoparticle has a catalytic activity, the template catalyst nanoparticle plays a role of initiation and/or acceleration of the polymerization of the carbonaceous material precursor in the vicinity of the particle. The amount of the template catalyst nanoparticle relative to the carbonaceous material precursor may be set such that the carbonaceous material precursor uniformly forms the maximum amount of the nano carbonaceous material intermediate. The amount of the template catalyst nanoparticle is dependent on the type of the carbonaceous material precursor to be used. The molar ratio between the carbonaceous material precursor and the template catalyst nanoparticle is, for example, of about 0.1 : 1 to 100 : 1, and preferably of about 1 : 1 to 30 : 1. The molar ratio, the type of the catalyst nanoparticle, and the particle diameter influence the thickness of the carbonaceous material portion in the nano-structured hollow carbonaceous material to be obtained.

A mixture of the template catalyst nanoparticle and the carbonaceous material precursor is sufficiently aged until the carbonaceous material intermediate is sufficiently formed on the surface of the template catalyst nanoparticle. A necessary time to form the carbonaceous material intermediate is dependent on the temperature, the type of the catalyst, the concentration of the catalyst, pH of the solution, and the type of the carbonaceous material precursor to be used. Adding ammonia for adjustment of pH can accelerate polymerization rate, and increase the amount of crosslinking between the carbonaceous material precursors, thereby the polymerization can be effectively performed in some times.

With regard to the carbonaceous material precursor which can be polymerized by heat, the polymerization thereof proceeds as the temperature rises. The polymerization temperature is preferably of from 0 to 200°C, and more preferably of from 25°C to 120°C.

With regard to optimum polymerization conditions of the resorcinol-formaldehyde gel (catalyst nanoparticle: iron, suspension pH: 1 to 14), the polymerization temperature is of from 0 to 90°C, and the aging time is of from 1 to 72 hours.

In the step (3), a carbonaceous material is formed by carbonizing the carbonaceous material intermediate to obtain a nano-structured composite material. The carbonization is usually performed by firing. The firing temperature is typically of from 500 to 2500°C. In the firing, oxygen atoms and nitrogen atoms in the carbonaceous material intermediate are released, the rearrangement of carbon atoms is induced, and the carbonaceous material is formed. The carbonaceous material preferably has a graphite-like layered structure (multi-layered) with a thickness of from 1 to 100 nm, and more preferably from 1 to 20 nm. The number of layers can be controlled using the type of the carbonaceous material intermediate, the thickness thereof, and the firing temperature. In addition, the thickness of the carbonaceous material portion in the nano-structured hollow carbonaceous material can also be controlled by adjusting the proceed in the polymerization of the carbonaceous material precursor and/or the carbonization of the carbonaceous material intermediate.

In the step (4), the template catalyst nanoparticle is removed from the nano-structured composite material to obtain the nano-structured hollow carbonaceous material. The removal is performed typically by bringing the nano-structured composite material into contact with an acid or a base such as nitric acid, a hydrogen fluoride solution, or sodium hydroxide. The removal is performed preferably by bringing the nano-structured composite material into contact with nitric acid (for example, 5N nitric acid) and refluxing these for 3 to 6 hours. The removal may be performed by a method which does not cause complete destruction of the nano hollow body structure and the nanoring structure. The thickness of the carbonaceous material portion in the nano-structured hollow carbonaceous material is dependent on the thickness of the carbonaceous material in the step (3).

The nano-structured hollow carbonaceous material of the present invention is unique in its shape, size, and electric characteristics. The shape thereof is, for example, a substantially spherical shape having the hollow portion, or has at least a part of the structure. The shape and the particle diameter of the nano-structured hollow carbonaceous material are significantly dependent on the shape and the size of the template catalyst nanoparticle used at manufacturing. Since the carbonaceous material is formed around the template catalyst nanoparticle, the shape and the diameter of the hollow portion and the shape and the particle diameter of the nano-structured hollow carbonaceous material are also influenced. The nano-structured hollow carbonaceous material may have not only the substantially spherical shape described above but also such a structure that the hollow portion is covered with the carbonaceous material portion in a saclike shape, a part of the structure, or an aggregate of the structure.

The shape of the nano-structured hollow carbonaceous material, the number of layers when the carbonaceous material portion is multi-layered, the thickness of the carbonaceous material portion, and the diameter of the hollow portion can be measured by using a transmission electron microscope (TEM) .

The nano-structured hollow carbonaceous material usually has a BET specific surface area of about 50 to 500 m²/g.

### Electrochemical energy storage device

An electrochemical energy storage device of the present invention includes electrodes each having the nano-structured hollow carbonaceous material described above. The electrochemical energy storage device is, for example, a non-aqueous electrolyte secondary battery.

An embodiment in which the electrode having the nano-structured hollow carbonaceous material is used as an electrode (positive electrode, negative electrode) for the non-aqueous electrolyte secondary battery is illustrated.

The non-aqueous electrolyte secondary battery can be manufactured by storing electrodes obtained by laminating and winding the positive electrode, a separator, and the negative electrode in a battery case and, thereafter, impregnating the battery case with an electrolyte including an organic solvent containing electrolyte salt. The electrodes is shaped such that its cross section obtained when the electrodes is cut in a direction perpendicular to the axis of the winding has a circular shape, an oval shape, a rectangular shape, a rounded rectangular shape, or the like. The shape of the battery includes a paper type, a coin type, a cylinder type, and an angular type.

### Positive electrode

The positive electrode is manufactured by coating a positive electrode collector with a positive electrode mixture containing a positive electrode active material, a conductive material, and a binder.

### (Positive electrode active material)

When the positive electrode active material is used for the positive electrode in a sodium ion secondary battery, the positive electrode active material may be any active material as long as it can be doped with the sodium ion and release it. Examples of the material include compounds represented by NaFeO₂, NaNiO₂, NaCoO₂, NaMnO₂, NaFe₁-ₓM¹ₓO₂, NaNi₁-ₓM¹ₓO₂, NaCo₁-ₓM¹ₓO₂, and NaMn₁-ₓM¹ₓO₂ (M¹ is at least one element selected from the group consisting of trivalent metals, and 0 ≤ x < 0.5 is usually satisfied). Specifically, by using a Na-Fe complex oxide with a hexagonal crystal structure as the positive electrode active material , the sodium ion secondary battery with a high discharge voltage and a higher energy density is obtained. Preferable complex oxide has a value of not more than 2, wherein the value is calculated by dividing the peak intensity at the spacing of 2.20 Å by the peak intensity at the spacing of 5.36 Å in an X-ray diffraction pattern of the complex oxide. The complex oxide is prepared by firing a metal compound mixture containing a sodium compound and an iron compound in a temperature range from 400°C to 900°C. In the temperature range of lower than 100°C in the course of rising of the temperature, heating is preferably performed in an inert atmosphere.

When the positive electrode active material is used for the positive electrode in a lithium ion secondary battery, the positive electrode active material may be any active material as long as it can be doped with the lithium ion and release it. Examples of the material include LiNiO₂, LiCoO₂, Li(Ni, Co)O₂, Li(Ni, Mn)O₂, Li(Ni, Co, Mn)O₂, LiMn₂O₄, and Li₂MnO₃.

### (Conductive material)

As the conductive material, the nano-structured hollow carbonaceous material can be used, and further may be used with other carbonaceous materials. Examples of the other carbonaceous materials include graphite powder, carbon black, and acetylene black. They can be used singly or in combination with another or more. The amount of the conductive material in the positive electrode mixture is usually not less than 1% by weight and not more than 30% by weight.

### (Binder)

The binder usually includes a thermoplastic resin. Examples of the thermoplastic resin include polyvinylidene fluoride (hereinafter occasionally referred to as PVDF), polytetrafluoroethylene (hereinafter occasionally referred to as PTFE), a tetrafluoroethylene-hexafluoropropylene-vinylidene fluoride copolymer, a hexafluoropropylene-vinylidene fluoride copolymer, and a tetrafluoroethylene-perfluorovinylether copolymer. These may be used singly or in combination with another or more. Examples of other binders include polysaccharides and their derivatives such as starch, methylcellulose, carboxymethylcellulose, hydroxymethylcellulose, hydroxyethylcellulose, hydroxypropylcellulose, carboxymethylhydroxyethylcellulose, and nitrocellulose. In addition, examples of other binders also include an inorganic fine particle such as colloidal silica.

### (Positive electrode collector)

The positive electrode collector usually includes A1, Ni, or stainless steel, and preferably includes A1 in view of easy processing into a thin film and low cost.

### (Coating)

The coating is performed by, for example, a method of press-molding the positive electrode mixture and the positive electrode collector, or a method in which the positive electrode mixture is formed into a paste using a solvent or the like, the paste is applied on the positive electrode collector and dried and, thereafter, the paste is pressed to be fixed. Optionally, two or more positive electrode active materials may be mixed with the positive electrode mixture.

### Separator

The separator includes material comprised of polyolefin such as polyethylene or polypropylene; a fluororesin; and a nitrogen-containing aromatic polymer. The separator is in the form of usually porous film, nonwoven fabric, or woven fabric. The separator includes two or more materials, or is a multi-layered article having two or more layers, and the material of one layer and the material of another layer may be different from each other.

When the separator is the multi-layered article, the porosities of the individual layers may be different from each other. A multi-layered separator obtained by laminating a nitrogen-containing aromatic polymer layer and a polyethylene layer is suitable in view of heat resistance and the performance in emergency shutdown as the separator for the secondary battery. Examples of the separator are disclosed in JP-A-2000-30686 and JP-A-10-324758. A thin separator is preferable in view of an improvement in the energy density of the battery and a reduction in internal resistance thereof, and a thick separator is advantageous in view of a mechanical strength. The separator usually has a thickness of about 10 to 200 µm, preferably about 10 to 30 µm, and more preferably about 10 to 20 µm.

### Negative electrode

The negative electrode is manufactured by coating the negative electrode collector with the negative electrode mixture containing the negative electrode active material, the binder, and optionally the conductive material.

### (Negative electrodes active material)

The negative electrode active material is usually a carbonaceous material. The nano-structured hollow carbonaceous material can be used as the negative electrode active material. The nano-structured hollow carbonaceous material may also be used with other carbonaceous materials. Examples of the other carbonaceous materials include graphite powder, carbon black, and acetylene black. They can be used singly or in combination with another or more. The conductive material in the negative electrode mixture may be optionally used. When the conductive material is used, the amount thereof is usually not less than 1% by weight and not more than 30% by weight.

### (Conductive material)

The conductive material is, for example, a carbonaceous material. Examples of the carbonaceous material include the nano-structured hollow carbonaceous material, graphite, carbon black, acetylene black, Ketjen Black, activated carbon, natural graphite, thermally expanded graphite, flaky graphite, expanded graphite, and carbon fiber (vapor growth carbon fiber) . They can be used singly or in combination with another or more. Examples of other conductive materials include metal fine particles or metal fibers composed of aluminum, nickel, copper, silver, gold, or platinum; a conductive metal oxide such as ruthenium oxide or titanium oxide; and conductive polymers such as polyaniline, polypyrrole, polythiophene, polyacetylene, and polyacene. As the conductive material, carbon black, acetylene black, and Ketjen Black are preferable in view of that even the use of a small amount thereof allows an effective improvement in conductivity. They can also be used singly or in combination with another or more.

### (Binder)

The binder is a polymer of a fluorine compound or the like. Examples of the polymer include fluorinated olefin, tetrafluoroethylene, trifluoroethylene, vinylidene fluoride, and hexafluoropropylene. Examples of other binders include polysaccharides and their derivatives such as starch, methylcellulose, carboxymethylcellulose, hydroxymethylcellulose, hydroxyethylcellulose, hydroxypropylcellulose, carboxymethylhydroxyethylcellulose, and nitrocellulose. Further, other binders include the inorganic fine particle such as colloidal silica. These may be used singly or in combination with another or more. The amount of the binder in the negative electrode is usually about 0.5 to 30 parts by weight, and preferably about 2 to 30 parts by weight relative to 100 parts by weight of the carbonaceous material.

### (Negative electrode collector)

The negative electrode collector usually includes Cu, Ni, or stainless steel. The negative electrode collector preferably includes Cu in view of that Cu is unlikely to form an alloy with lithium or sodium, and it is easy to process Cu into a thin film.

### (Coating)

The coating is performed by, for example, a method of press-molding the negative electrode mixture and the negative electrode collector, or a method in which the negative electrode mixture is formed into a paste using a solvent or the like, the paste is applied on the negative electrode collector and dried, and, thereafter, the paste is pressed to be fixed.

### Electrolyte

The electrolyte usually includes an electrolyte salt and an organic solvent.

### (Electrolyte salt)

As to the lithium ion secondary battery, examples of the electrolyte salt include lithium salts such as LiClO₄, LiPF₆, LiBF₄, LiCF₃SO₃, LiN (SO₂CF₃)₂, LiN (C₂F₅SO₂)₂, and LiC (SO₂CF₃)₃· These may also be used in combination with another or more.

As to the sodium ion secondary battery, examples of the electrolyte salt include sodium salts such as NaClO₄, NaPF₆, NaBF₄, NaCF₃SO₃, NaN (SO₂CF₃)₂, NaN (C₂F₅O₂)₂, and NaC (SO₂CF₃)₃. These may also be used in combination with another or more.

### (Organic solvent)

As the organic solvent, for example, there can be used carbonates such as propylene carbonate (PC), ethylene carbonate (EC), dimethyl carbonate (DMC), diethyl carbonate (DEC), ethyl methyl carbonate (EMC), 4-trifluoromethyl-1,3-dioxolane-2-one, 1,2-di(methoxycarbonyloxy)ethane, and vinylene carbonate (VC); ethers such as 1,2-dimethoxyethane, 1,3-dimethoxypropane, pentafluoropropylmethylether, 2,2,3,3-tetrafluoropropyldifluoromethylether, tetrahydrofuran, and 2-methyltetrahydrofuran; esters such as methyl formate, methyl acetate, and γ-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propane sultone. Alternatively, an organic solvent obtained by introducing a fluorine substituent into the organic solvent described above can also be used. Usually, these are used in combination with another or more. Specifically, a mixed solvent containing the carbonate is preferable, and the mixed solvent of a cyclic carbonate and a non-cyclic carbonate, or the mixed solvent of the cyclic carbonate and the ether is more preferable.

### Solid electrolyte

The solid electrolyte is used in place of the electrolyte. Examples of the solid electrolyte include polymer electrolyte such as a polyethylene oxide-based polymer and a polymer containing at least one polyorganosiloxane chain or at least one polyoxyalkylene chain. A gel-type electrolyte in which a polymer hold a non-aqueous electrolyte can also be used. Use of a sulfide electrolyte such as Li₂S-SiS₂, Li₂S-GeS₂, Li₂S-P₂S₅, and Li₂S-B₂S₃, or an inorganic compound electrolyte containing sulfides such as Li₂S-SiS₂-Li₃PO₄ and Li₂S-SiS₂-Li₂SO₄ can improve safety in some times.

Embodiments of the electrode having the nano-structured hollow carbonaceous material used in the non-aqueous electrolyte secondary battery which is typically the lithium ion secondary battery or the sodium ion secondary battery has been illustrated as described the above. The electrode having the nano-structured hollow carbonaceous material can be similarly used in other electrochemical energy storage devices. Examples of the electrochemical energy storage devices include an aqueous electrolyte secondary battery such as a nickel-cadmium secondary battery and a nickel-metal hydride secondary battery; an air secondary battery; and a capacitor. The manufacturing of the electrodes for these batteries may be performed by using conventional techniques. The electrode for the aqueous electrolyte secondary battery can be manufactured by methods disclosed in JP-A-08-315810 and JP-A-2004-014427. Further, the electrode for the air secondary battery can be manufactured by a method disclosed in JP-A-50-28640, and the electrode for the capacitor can be manufactured by a method disclosed in JP-A-2000-106327.

### EXAMPLES

The present invention will be described in detail on the basis of Examples.

### Example 1

### (1) Manufacturing of nano-structured hollow carbonaceous material (CNS1)

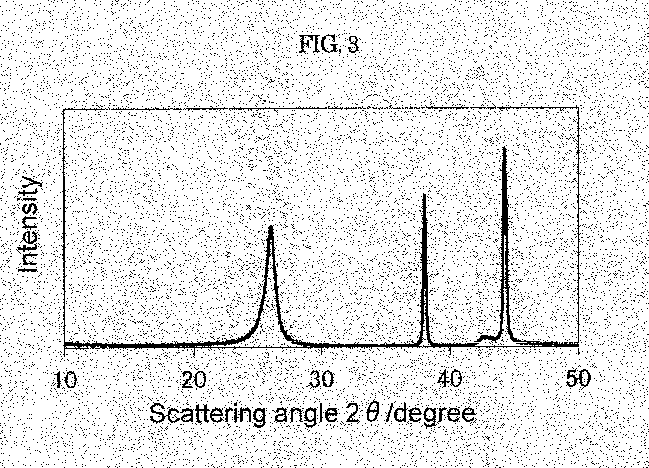

0.1 M iron solution was prepared using 2.24 g of iron powder, 7.70 g of citric acid, and 400 ml of water, put in a sealable vessel, and mixed using a desktop shaker for 7 days. While mixing, a generated hydrogen gas was appropriately exhausted from the vessel, and a liquid mixture containing a catalyst nanoparticle was obtained. 100 ml of the liquid mixture containing the catalyst nanoparticle was added to a mixed solution of 6.10 g of resorcinol and 9.0 g of formaldehyde, and 30 ml of an ammonia aqueous solution was dropped with vigorous agitation. The obtained suspension had a pH of 10.26. The suspension was heated to 80 to 90°C on an oil bath and aged for 3.5 hours to form a carbonaceous material intermediate. The carbonaceous material intermediate was recovered though filtration, dried overnight in an oven, and fired at 1150°C in a nitrogen atmosphere for 3 hours. The obtained nano-structured composite material and 5 M nitric acid solution were refluxed for 6 to 8 hours, and the nano-structured composite material was thermally treated at 90°C for 3 hours in 300 ml of an oxidizing liquid mixture (H₂O/H₂SO₄/KMnO₄ = 1 : 0.01 : 0.003, molar ratio). Further, the nano-structured composite material was washed with water, and dried in the oven for 3 hours to obtain 1.1 g of a nano-structured hollow carbonaceous material (CNS1). A powder X-ray diffraction pattern of the nano-structured hollow carbonaceous material (CNS1) is shown in FIG. 3. CNS1 had a carbonaceous material portion in the form of with multi-layered , a thickness of the carbonaceous material portion of 16 to 20 nm, and a diameter of a hollow portion of 8 to 11 nm. CNS1 had a BET specific surface area of 122 m²/g. The BET specific surface area was measured by using Flow Sorb II2300 manufactured by Micromeritics Co. after 1 g of the powder was dried in the nitrogen atmosphere at 150°C for 15 minutes.

### (2) formation of pellet

0.5 g of the nano-struotured hollow carbonaceous material (CNS1) obtained in (1) described above was placed in a pelletizer (Ø 20 mm), pressurized at 10 MPa, and maintained under pressure for 5 minutes to form a pellet.

### (3) Measurement of pellet density

The thickness of the pellet was measured. Its thickness was 0.31 cm. Since the pellet had an apparent density of 0.59 g/cm³, which was high, the pellet was excellent in filling characteristics when used in the electrode.

### Comparative Example 1

### (1) Manufacturing of pellet

The pellet was manufactured in the same manner as in Example 1 except that acetylene black, which was a type of carbon black, was used instead of the nano-structured hollow carbonaceous material.

### (2) Measurement of pellet density

The thickness of the pellet was measured. Its thickness was 0.48 cm. Since the pellet had an apparent density of 0.50 g/cm³, which was low, the pellet was not sufficient in filling characteristics when used in the electrode.

### Example 2

### (1) Manufacturing of electrode

The nano-structured hollow carbonaceous material obtained in Example 1 nd polyvinylidene fluoride (PVDF) as a binder were weighed so as to have a composition satisfying carbonaceous material : binder = 82 : 18 (weight ratio). The binder was dissolved in N-methylpyrrolidone (NMP) to obtain a binder solution. The carbonaceous material was added to the binder solution to obtain a slurry. A copper foil having a thickness of 10 µm as a collector was coated with the slurry using a doctor blade and was dried in a dryer to form an electrode sheet. The electrode sheet was punched using an electrode punch to obtain circular electrodes with a diameter of 1.5 cm. Further, the electrodes were compressed using a press (EA1).

### (2) Measurement of thickness of electrode

The thickness of the electrode was measured. Its thickness was 93 µm.

### Comparative Example 2

### (1) Manufacturing of electrode

The electrode was manufactured in the same manner as in Example 2 except that acetylene black, which was a type of carbon black, was used instead of the nano-structured hollow carbonaceous material.

### (2) Measurement of thickness of electrode

The thickness of the electrode was measured. Its thickness was 145 µm.

From the results of Example 2 and Comparative Example 2, it is found that as the negative electrode active material, the nano-structured hollow carbonaceous material is more excellent than carbon black having the same primary particle diameter as the nano-structured hollow carbonaceous material in filling characteristics and moldability.

### Example 3

### (1) Manufacturing of electrode (positive electrode)

The positive electrode active material LiNiO₂ and the nano-structured hollow carbonaceous material (conductive material) of Example 1 were weighed as as to have a composition satisfying 70 : 25, and mixed in an agate mortar. Polyvinylidene fluoride (PVDF) as the binder was weighed so as to have the composition satisfying the positive electrode active material : the conductive material : the binder = 70 : 25 : 5 (weight ratio) . The binder was dissolved in N-methylpyrrolidone (NMP) to obtain a binder solution. The mixture of the positive electrode active material and the conductive material was added to the binder solution to obtain a slurry. An aluminum foil having a thickness of 10 µm as the collector was coated with the slurry using a doctor blade and dried in the dryer to form an electrode sheet. The electrode sheet was punched using an electrode punch to obtain a circular positive electrode (CE1) with a diameter of 1.5 cm.

### (2) Measurement of thickness of electrode

The thickness of the electrode was measured. Its thickness was 86 µm.

### Comparative Example 3

### (1) Manufacturing of electrode

The electrode was manufactured in the same manner as in Example 3 except that acetylene black, which was a type of carbon black, was used instead of the nano-structured hollow carbonaceous material.

### (2) Measurement of thickness of electrode

The thickness of the electrode was measured. Its thickness was 137 µm.

From the results of Example 3 and Comparative Example 3, it is found that as the conductive material, the nano-structured hollow carbonaceous material is more excellent than carbon black having about the same primary particle diameter as the nano-structured hollow carbonaceous material in filling characteristics and moldability.

### Example 4

### (1) Manufacturing of negative electrode test battery

The electrode (EA1) manufactured in the same manner as in Example 2 placed on a lower lid of a coin cell with its copper foil surface directed downward as a working electrode, 1M LiPF₆/EC+DMC as an electrolyte, a polypropylene porous film (manufactured by Celgard, Inc., Celgard 3501, product name) as a separator, and metal lithium (manufactured by Aldrich) as a counter electrode were assembled to obtain a test battery (TLB1). The assembly of the test battery was conducted in a glove box of an argon atmosphere.

### (2) Charge/discharge test

With regard to the test battery (TLB1), a constant current charge/discharge test was carried out under the following conditions.

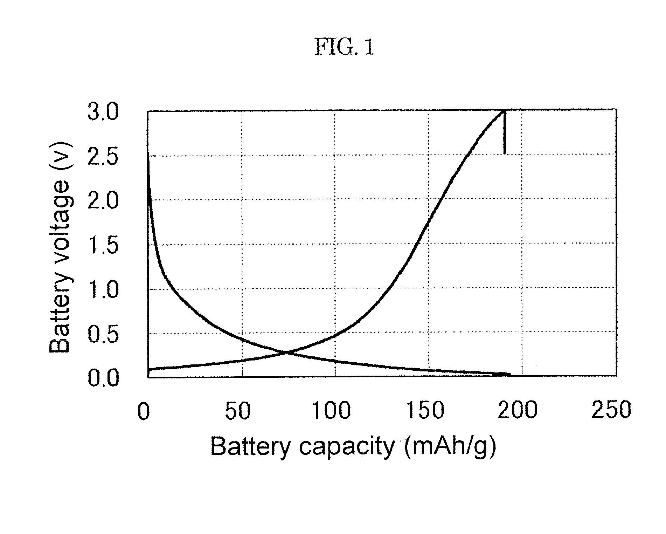

Charge/discharge conditions:
With regard to charge (doping carbon with Li), a CC (constant current) charge was performed at 0.2 mA/cm² from a rest potential to 0.01 V.
With regard to discharge (releasing of Li from carbon), a CC (constant current) discharge was performed at 0.2 mA/cm², and was cut off at the voltage of 3 V.
A discharge capacity at the second cycle was 191 mAh/g. As shown in FIG. 1, the test battery has a unique characteristics that a potential change caused by the charge and the discharge is gradual. Due to the characteristic, charge and discharge states of the electrochemical energy storage device can be estimated with high precision by measuring the potential of the electrochemical energy storage device having the electrode. Such an electrochemical energy storage device is highly convenient.

### Example 5

### (1) Manufacturing of negative electrode test battery

The electrode manufactured in the same manner as in Example 2 placed on the lower lid of the coin cell with its copper foil surface directed downward as the working electrode, 1M NaClO₄/PC as the electrolyte, the polypropylene porous film (manufactured by Celgard, Inc., Celgard 3501, product name) as the separator, and metal sodium (manufactured by Aldrich) as the counter electrode, were assembled to obtain a test battery. The assembly of the test battery was conducted in the glove box of the argon atmosphere.

### (2) Charge/discharge test

With regard to the test battery, the constant current charge/discharge test was carried out under the following conditions.

Charge/discharge conditions:
With regard to charge (doping carbon with Na), the CC (constant current) charge was performed at 0.2 mA/cm² from the rest potential to 0.01 V.
With regard to discharge (releasing of Na from carbon), the CC (constant current) discharge was performed at 0.2 mA/cm², and was cut off at the voltage of 3 V. The discharge capacity at the first cycle was 80 mAh/g.

### Example 6

### (1) Manufacturing of positive electrode test battery

The electrode (CE1) manufactured in the same manner as in Example 3 placed on the lower lid of the coin cell with its aluminum foil surface directed downward as the working electrode,
1M LiPF₆/EC+DMC as the electrolyte,
the polypropylene porous film (manufactured by Celgard, Inc., Celgard 3501, product name) as the separator, and
the metal lithium (manufactured by Aldrich Chemical Company, Inc.) as the counter electrode,
were assembled to obtain a test battery. The assembly of the test battery was conducted in the glove box of the argon atmosphere.

### (2) Charge/discharge test

With regard to the test battery, the constant current charge/discharge test was carried out under the following conditions.

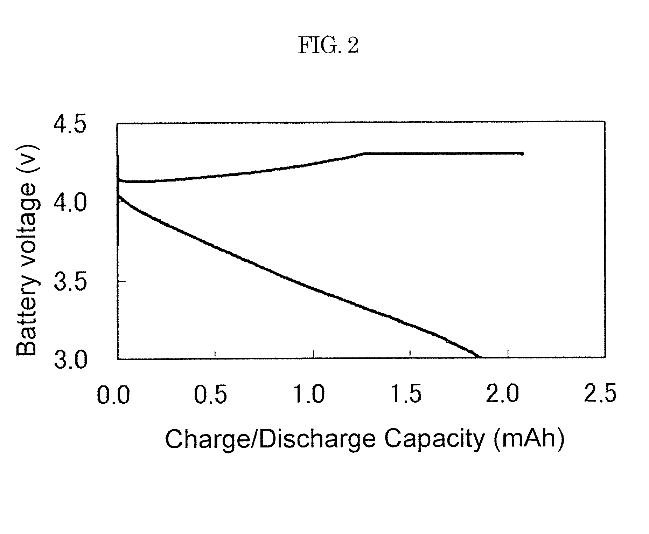

Charge/discharge conditions: the CC (constant current) charge was performed at 0.2 mA/cm² up to the charge of 4.3 V. Next, the charge was switched to a CV (constant voltage) charge at 4.3 V, and the charge was stopped at the point when the current value was lowered to 0.02 mA. With regard to the discharge, the CC (constant current) discharge was performed at 0.2 mA/cm², and was cut off at the voltage of 3 V. The discharge capacity at the first cycle was 1.9 mAh. Even after the charge and the discharge were repeated 10 times, the discharge capacity was 1.9 mAh, and the test battery exhibited excellent charge/discharge characteristics (FIG. 2).

### Example 7

### (1) Manufacturing of positive electrode active material

In the glove box of the argon atmosphere Na₂O₂ (manufactured by Fluka Chemie AG) and Fe₃O₄ (manufactured by Aldrich Chemical Company, Inc.) were weighed such that Na and Fe meet the stoichiometric ratio of NaFeO₂, and mixed in an agate mortar. The obtained mixture was put in an alumina crucible, and the alumina crucible was placed in an electric furnace, maintained for 12 hours at 650°C, and taken out of the electric furnace, whereby a positive electrode active material for the sodium ion secondary battery E1 was obtained.

### (2) Manufacturing of positive electrode

The positive electrode active material E1 obtained in (1) and the conductive material (the nano-structured hollow carbonaceous material) were weighed so as to have a composition satisfying 70 : 25, and mixed in the agate mortar. Polyvinylidene fluoride (PVDF) as the binder was weighed so as to have the composition satisfying E1 : the conductive material : the binder = 70 : 25 : 5 (weight ratio). The binder was dissolved in N-methylpyrrolidone (NMP) to obtain a binder solution. The mixture of E1 and the conductive material was added to the binder solution to obtain a slurry. The aluminum foil having a thickness of 10 µm as the current collector was coated with the slurry using a doctor blade and dried in the dryer to form an electrode sheet. The electrode sheet was punched using an electrode punch to obtain a circular positive electrode with a diameter of 1.5 cm.

### (3) Manufacturing of negative electrode

A negative electrode was manufactured in the same manner as in Example 2.

### (4) Manufacturing of test battery

The positive electrode placed on the lower lid of the coin cell with its aluminum foil surface directed downward, 1M NaClO₄/PC as the electrolyte, the polypropylene porous film (manufactured by Celgard, Inc., Celgard 3501, product name) as the separator, and
the negative electrode placed with its copper foil surface directed upward,
were assembled to obtain a test battery. The assembly of the test battery was conducted in the glove box of the argon atmosphere.

### (5) Charge/discharge test

With regard to the test battery, a constant current charge/discharge test was carried out under the following conditions.

Charge/discharge conditions:
With regard to the charge, the CC (constant current) charge was performed at 0.353 mA from the rest potential to 4.0 V. Next, the charge was switched to the CV (constant voltage) charge at 4.0 V, and the CV charge was stopped at the point when the current value was lowered to 0.035 mA.
With regard to the discharge, the CC (constant current) discharge was performed at 0.353 mA, and was cut off at the voltage of 1.5 V. The discharge capacity at the first cycle was 0.47 mAh.

### Example 8

### (1) Manufacturing cf test battery

The electrode (CE1) manufactured in the same manner as in Example 3 placed on the lower lid of the coin cell with its aluminum foil surface directed downward as the positive electrode,
1M LiPE₆/EC+DMC as the electrolyte,
the polypropylene porous film (manufactured by Celgard, Inc., Celgard 3501, product name) as the separator, and
the electrode (EA1) manufactured in the same manner as in Example 2 as the negative electrode,
were assembled to obtain a test battery (TLIB1). The assembly of the test battery was conducted in the glove box of the argon atmosphere.

### (2) Charge/discharge test

With regard to the test battery, the constant current charge/discharge test was carried out under the following conditions.

Charge/discharge conditions: the CC (constant current) charge was performed at 0.2 mA/cm² up to the charge of 4.2 V. Next, the charge was switched to the CV (constant voltage) charge at 4.2 V, and the charge was stopped at the point when the current value was lowered to 0.02 mA.
With regard to the discharge, the CC (constant current) discharge was performed at 0.2 mA/cm², and was cut off at the voltage of 3 V. The discharge capacity at the first cycle was 1.5 mAh. In addition, even after the charge and the discharge were repeated 10 times, the discharge capacity was 1. 5 mAh, and the test battery exhibited excellent cycle characteristics.

### Examples 9 to 11

### (1) Manufacturing of nano-structured hollow carbonaceous materials (CNS2 to CNS4)

Nano-structured hollow carbonaceous materials CNS2 (Example 9: the carbonaceous material portion was multi-layered, the thickness of the carbonaceous material portion was 16 to 19 nm, the diameter of the hollow portion was 8 to 10 nm, and the BET specific surface area was 50 m²/g.), CNS3 (Example 10: the carbonaceous material portion was multi-layered, the thickness of the carbonaceous material portion was 18 to 25 nm, the diameter of the hollow portion was 8 to 11nm, and the BET specific surface area was 296 m²/g.), and CNS4 (Example 11: the carbonaceous material portion was multi-layered, the thickness of the carbonaceous material portion was 16 to 20 nm, the diameter of the hollow portion was 8 to 11nm, and the BET specific surface area was 106 m²/g.) were obtained in the same manner as in Example 1 except that the firing time was changed.

### (2) Manufacturing of electrode (negative electrode)

By using each of the nano-structured hollow carbonaceous materials (CNS2 to CNS4), electrodes (EA2 to EA4) were manufactured in the same manner as in Example 2.

### (3) Manufacturing of negative electrode test battery

By using each of the electrodes (EA2 to EA4), negative electrode test batteries (TLB2 to TLB4) were manufactured in the same manner as in Example 4.

### (4) Charge/discharge test of negative electrode test battery

By using each of the negative electrode test batteries (TLB2 to TLB4), the constant current charge/discharge test was carried out under the same conditions as in Example 4. The discharge capacity at the first cycle was 200 mAh/g for TLB2, 153 mAh/g for TLB3, and 195 mAh/g for TLB4.

### (5) Manufacturing of electrode (positive electrode)

By using each of the nano-structured hollow carbonaceous materials (CNS2 to CNS4), positive electrodes (CE2 to CE4) were manufactured in the same manner as in Example 3.

### (6) Manufacturing of test battery

By using each of the positive electrodes CE2 to CE4 with respect to each of the negative electrodes EA2 to EA4, test batteries (TLIB2 to TLIB4) were manufactured in the same manner as in Example 8.

### (7) Charge/discharge test of test battery

By using each of the test batteries (TLIB2 to TLIB4), the constant current charge/discharge test was carried out under the same conditions as in Example 8. The discharge capacity at the first cycle was 1.6 mAh for TLIB2, 1.5 mAh for TUB3, and 1. 6 mAh for TLB4. Even after the charge and the discharge were repeated 10 times, the test batteries maintained the discharge capacities and exhibited excellent cycle characteristics.

### INDUSTRIAL APPLICABILITY

According to the present invention, it is possible to provide an electrode for an electrochemical energy storage device which can enhance charge/discharge characteristics and an energy density of the electrochemical energy storage device such as a secondary battery to levels higher than those achieved by an electrode having a conventional carbonaceous material, and can be manufactured at low cost with simpler operations than conventionally. The electrode of the present invention can be suitably used especially in a non-aqueous electrolyte secondary battery such as a lithium ion secondary battery, and a sodium ion secondary battery. In addition, the electrode can be used in an air secondary battery and a capacitor.

## Claims

1. An electrode for an electrochemical energy storage device comprising a nano-structured hollow carbonaceous material.

2. The electrode of claim 1, wherein the nano-structured hollow carbonaceous material meets a requirement (A),
(A) the nano-structured hollow carbonaceous material has a carbonaceous material portion and a hollow portion, and has such a structure that the hollow portion is covered with the carbonaceous material portion in a saclike shape, a part of the structure, or an aggregate of the structure.

3. The electrode of claim 2, wherein the nano-structured hollow carbonaceous material further meets requirements (B) and (C),
(B)the carbonaceous material portion in the nano-structured hollow carbonaceous material has a thickness of from 1 nm to 100 nm,
(C) the hollow portion in the nano-structured hollow carbonaceous material has a diameter of from 0.5 nm to 90 nm.

4. The electrode of any one of claims 1 to 3, wherein the nano-struotured hollow carbonaceous material is obtained by a method including steps (1), (2), (3), and (4) in this order,
(1) preparing a template catalyst nanoparticle,
(2) polymerizing a carbonaceous material precursor in presence of the template catalyst nanoparticle to form a carbonaceous material intermediate on a surface of the nanoparticle,
(3) forming a carbonaceous material by carbonizing the carbonaceous material intermediate to obtain a nano-structured composite material,
(4) removing the template catalyst nanoparticle from the nano-structured composite material to obtain the nano-structured hollow carbonaceous material.

5. The electrode of any one of claim 1 to 4 further comprising a binder.

6. The electrode of any one of claim 1 to 5 further comprising an active material.

7. A non-aqueous electrolyte secondary battery comprising the electrode of any one of claim 1 to 6.

8. The battery of claim 7, wherein the non-aqueous electrolyte secondary battery is a lithium ion secondary battery.

9. The battery of claim 7, wherein the non-aqueous electrolyte secondary battery is a sodium ion secondary battery.
